(19) Europäisches Patentamt
European Patent Office
Office européen des brevets

(11) EP 2 086 319 B1

(12) **EUROPEAN PATENT SPECIFICATION**

(45) Date of publication and mention of the grant of the patent:
**03.11.2010 Bulletin 2010/44**

(21) Application number: **07840066.0**

(22) Date of filing: **15.11.2007**

(51) Int Cl.:
***A01N 35/04*** *(2006.01)*

(86) International application number:
**PCT/US2007/024057**

(87) International publication number:
**WO 2008/060611 (22.05.2008 Gazette 2008/21)**

(54) **FUNGICIDAL MIXTURES**

FUNGIZIDE MISCHUNGEN

MÉLANGES FONGICIDES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.11.2006 US 859175 P**

(43) Date of publication of application:
**12.08.2009 Bulletin 2009/33**

(73) Proprietor: **E.I. DU PONT DE NEMOURS AND COMPANY**
**Wilmington, DE 19898 (US)**

(72) Inventors:
- **HONG, Wonpyo**
**Lutherville, Maryland 21093 (US)**
- **SELBY, Thomas Paul**
**Hockessin, Delaware 19707 (US)**

(74) Representative: **Beacham, Annabel Rose et al**
**Dehns**
**St Bride's House**
**10 Salisbury Square**
**London**
**EC4Y 8JD (GB)**

(56) References cited:

**EP-A- 0 897 904**
**WO-A-94/26722**
**WO-A-97/33890**
**WO-A-99/14202**
**WO-A-02/094797**
**WO-A-03/014103**
**US-A- 6 066 638**
**US-B1- 6 245 770**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 086 319 B1

Printed by Jouve, 75001 PARIS (FR)

## Description

### FIELD OF THE INVENTION

This invention relates to certain mixtures of fused ring ketone compounds with metrafenone and to compositions comprising such mixtures and methods for using such mixtures as fungicides.

### BACKGROUND OF THE INVENTION

The control of plant diseases caused by fungal plant pathogens is extremely important in achieving high crop efficiency. Plant disease damage to ornamental, vegetable, field, cereal and fruit crops can cause significant reduction in productivity and thereby result in increased costs to the consumer. In addition to often being highly destructive, plant diseases can be difficult to control and may develop resistance to commercial fungicides. Powdery mildews afflict a wide variety of crops. A particularly important example in wheat crops is wheat powdery mildew, caused by the fungal pathogen *Erysiphe graminis* f. sp. *tritici,* and fungicide products to control this disease are in constant demand by growers. Combinations of fungicides are often used to facilitate disease control, to broaden spectrum of control and retard resistance development. Furthermore, certain rare combinations of fungicides demonstrate a greater-than-additive (i.e. synergistic) effect to provide commercially important levels of plant disease control. The advantages of particular fungicide combinations are recognized in the art to vary, depending on such factors as the particular plant species and plant disease to be treated, and whether the plants are treated before or after infection with the fungal plant pathogen. Accordingly new advantageous combinations are needed to provide a variety of options to best satisfy particular plant disease control needs. Remarkably advantageous combinations have now been discovered.

### SUMMARY OF THE INVENTION

This invention relates to a fungicidal mixture (i.e. combination) comprising

(a) at least one compound selected from the compounds of Formula **1** (including all geometric and stereoisomers), *N*-oxides, and salts thereof,

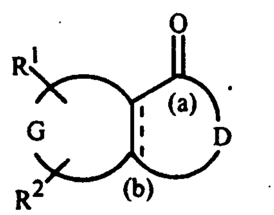

**1**

wherein

| | |
|---|---|
| G | is taken together with the two contiguous linking carbon atoms to form a fused phenyl, thiophene or pyridine ring; |
| $R^1$ | is halogen; |
| $R^2$ | is hydrogen or halogen; |
| D | is selected from D-1 , D-2 and D-3 and is attached at the position identified with (a') to the carbon atom (further identified with (a)) of the C=0 moiety in Formula **1** and attached at the position identified with (b') to the carbon atom (further identified with (b)) of the fused ring in Formula **1**, |

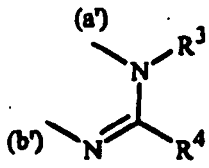 , 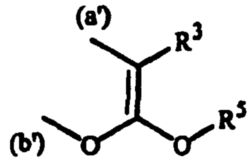 or 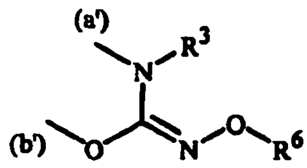 ;

D-1 D-2 D-3

$R^3$ is $C_1$-$C_6$ alkyl or $C_4$-$C_8$ cycloalkylalkyl;
$R^4$ is $C_1$-$C_6$ alkyl, $C_1$-$C_6$ alkoxy or $C_1$-$C_6$ alkylthio;
$R^5$ is $C_1$-$C_6$ alkyl, $C_2$-$C_6$ alkenyl or $C_2$-$C_6$ alkynyl; and
$R^6$ is $C_1$-$C_3$ alkyl, $C_1$-$C_3$ haloalkyl or cyclopropylmethyl;

(b) the compound of Formula **2**

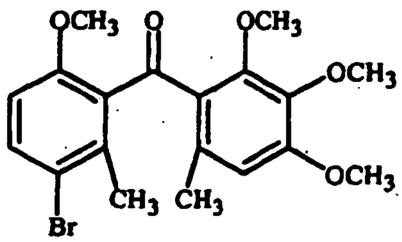

**2**

(3-bromo-6-methoxy-2-methylphenyl)(2,3,4-trimethoxy-6-methylphenyl)methanone, metrafenone); wherein the weight ratio of component (b) to component (a) is from 125:1 to 1:125; and optionally

(c) one or more compounds selected from the group consisting of

(c1) alkylenebis(dithiocarbamate) fungicides;
(c2) cymoxanil;
(c3) phenylamide fungicides;
(c4) chlorothalonil;
(c5) carboxamides acting at complex II of the fungal mitochondrial respiratory electron transfer site;
(c6) quinoxyfen;
(c7) 5-chloro-6-(2,4,6-trifluorophenyl)-7-(4-methylpiperidin-1-yl)[1,2,4]triazolo[1,5-*a*]pyrimidine;
(c8) cyflufenamid;
(c9) cyprodinil;
(c10) copper compounds;
(c11) phthalimide fungicides;
(c12) fosetyl-aluminum;
(c13) benzimidazole fungicides;
(c14) cyazofamid;
(c15) fluazinam;
(c16) iprovalicarb;
(c17) propamocarb;
(c18) validomycin;
(c19) dichlorophenyl dicarboximide fungicides;
(c20) zoxamide;
(c21) fluopicolide;
(c22) mandipropamid;
(c23) carboxylic acid amides acting on phospholipid biosynthesis and cell wall deposition;

(c24) dimethomorph;
(c25) non-DMI sterol biosynthesis inhibitors;
(c26) inhibitors of demethylase in sterol biosynthesis;
(c27) *bc*$_1$ complex fungicides; and

salts of compounds of (c1) through (c27),

provided that when D is D-3, the mixture includes at least one of (c1), (c2), (c6), (c7), (c8) or (c12).

This invention also relates to a fungicidal composition comprising a fungicidally effective amount of the aforesaid mixture and at least one additional component selected from the group consisting of surfactants, solid diluents or liquid diluents.

This invention also relates to a method for controlling plant diseases caused by fungal plant pathogens comprising applying to the plant or portion thereof, or to the plant seed, a fungicidally effective amount of the aforesaid mixture (e.g., as a composition described herein).

## DETAILS OF THE INVENTION

As used herein, the terms "comprises," "comprising," "includes," "including," "has," "having", "contains" or "containing" or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, the indefinite articles "a" and "an" preceding an element or component of the invention are intended to be nonrestrictive regarding the number of instances (i.e. occurrences) of the element or component. Therefore "a" or "an" should be read to include one or at least one, and the singular word form of the element or component also includes the plural unless the number is obviously meant to be singular.

As referred to in the present disclosure and claims, "plant" includes members of Kingdom Plantae, particularly seed plants (Spermatopsida), at all life stages, including young plants (e.g., germinating seeds developing into seedlings) and mature, reproductive stages (e.g., plants producing flowers and seeds). Portions of plants include geotropic members typically growing beneath of the surface of the growing medium (e.g., soil), such as roots, tubers, bulbs and corms, and also members growing above the growing medium, such as foliage (including stems and leaves), flowers, fruits and seeds.

As referred to herein, the term "seedling", used either alone or in a combination of words means a young plant developing from the embryo of a seed.

In Formula **1**, the dotted line parallel to the solid line denotes a carbon-carbon bond having a single, double or intermediate bond order as needed to accommodate the fused phenyl, thiophene or pyridine ring formed with G.

In the above recitations, the term "alkyl", used either alone or in compound words such as "alkylthio" includes straight-chain or branched alkyl, such as methyl, ethyl, *n*-propyl, i-propyl, or the different butyl, pentyl or hexyl isomers. "Alkenyl" includes straight-chain or branched alkenes such as ethenyl, 1-propenyl, 2-propenyl, and the different butenyl, pentenyl and hexenyl isomers. "Alkenyl" also includes polyenes such as 1,2-propadienyl and 2,4-hexadienyl. "Alkoxy" includes, for example, methoxy, ethoxy, *n*-propyloxy, isopropyloxy and the different butoxy, pentoxy and hexyloxy isomers. "Alkylthio" includes branched or straight-chain alkylthio moieties such as methylthio, ethylthio, and the different propylthio, butylthio, pentylthio and hexylthio isomers. "Cycloalkyl" includes, for example, cyclopropyl, cyclobutyl, cyclopentyl, and cyclohexyl. "Cycloalkylalkyl" includes alkyl groups substituted with cycloalkyl groups, for example, cyclopropylmethyl, cyclopropylethyl and cyclohexylmethyl.

The term "halogen" includes fluorine, chlorine, bromine or iodine.

The total number of carbon atoms in a substituent group is indicated by the "$C_i$-$C_j$" prefix where i and j are numbers from 1 to 8.

When a group contains a substituent which can be hydrogen, for example $R^2$, then, when this substituent is taken as hydrogen, it is recognized that this is equivalent to said group being unsubstituted.

Compounds suitable for use in accordance with this invention can exist as one or more stereoisomers. The various stereoisomers include enantiomers, diastereomers, atropisomers and geometric isomers. One skilled in the art will appreciate that one stereoisomer may be more active and/or may exhibit beneficial effects when enriched relative to the other stereoisomer(s) or when separated from the other stereoisomer(s). Additionally, the skilled artisan knows how to separate, enrich, and/or to selectively prepare said stereoisomers. The compounds may be present as a mixture of stereoisomers, individual stereoisomers, or as optically active forms.

One skilled in the art will appreciate that not all nitrogen containing heterocycles can form *N*-oxides since the

nitrogen requires an available lone pair for oxidation to the oxide; one skilled in the art will recognize those nitrogen containing heterocycles which can form *N*-oxides. One skilled in the art will also recognize that tertiary amines can form *N*-oxides. Synthetic methods for the preparation of *N*-oxides of heterocycles and tertiary amines are very well known by one skilled in the art including the oxidation of heterocycles and tertiary amines with peroxy acids such as peracetic and *m*-chloroperbenzoic acid (MCPBA), hydrogen peroxide, alkyl hydroperoxides such as *t*-butyl hydroperoxide, sodium perborate, and dioxiranes such as dimethyldioxirane. These methods for the preparation of *N*-oxides have been extensively described and reviewed in the literature, see for example: T. L. Gilchrist in Comprehensive Organic Synthesis, vol. 7, pp 748-750, S. V. Ley, Ed., Pergamon Press; M. Tisler and B. Stanovnik in Comprehensive Heterocyclic Chemistry, vol. 3, pp 18-20, A. J. Boulton and A. McKillop, Eds., Pergamon Press; M. R. Grimmett and B. R. T. Keene in Advances in Heterocyclic Chemistry, vol. 43, pp 149-161, A. R. Katritzky, Ed., Academic Press; M. Tisler and B. Stanovnik in Advances in Heterocyclic Chemistry, vol. 9, pp 285-291, A. R. Katritzky and A. J. Boulton, Eds., Academic Press; and G. W. H. Cheeseman and E. S. G. Werstiuk in Advances in Heterocyclic Chemistry, vol. 22, pp 390-392, A. R. Katritzky and A. J. Boulton, Eds., Academic Press.

One skilled in the art recognizes that because in the environment and under physiological conditions salts of chemical compounds are in equilibrium with their corresponding nonsalt forms, salts share the biological utility of the nonsalt forms. When the compounds forming the present mixtures and compositions contain acidic or basic moieties, a wide variety of salts can be formed, and these salts are useful in the present mixtures and compositions for controlling plant diseases caused by fungal plant pathogens (i.e. are agriculturally suitable). When a compound contains a basic moiety such as an amine function, salts include acid-addition salts with inorganic or organic acids such as hydrobromic, hydrochloric, nitric, phosphoric, sulfuric, acetic, butyric, fumaric, lactic, maleic, malonic, oxalic, propionic, salicylic, tartaric, 4-toluenesulfonic or valeric acids. When a compound contains an acidic moiety such as a carboxylic acid or phenol, salts include those formed with organic or inorganic bases such as pyridine, triethylamine or ammonia, or amides, hydrides, hydroxides or carbonates of sodium, potassium, lithium, calcium, magnesium or barium. Accordingly, the present invention comprises mixtures of one or more compounds selected from Formula **1**, *N*-oxides and agriculturally suitable salts thereof, with the compound of Formula **2** and optionally one or more compounds and agriculturally suitable salts thereof selected from (c) as described in the Summary of the Invention.

Accordingly, the present invention comprises compounds of Formula 1, *N*-oxides and suitable salts thereof, component (b), wherein the weight ratio of component (b) to component (a) is from 125:1 to 1:125, and optionally component (c).

Embodiments of the present invention include:

Embodiment 1. The mixture described in the Summary of the Invention wherein component (a) is a compound of Formula **1** or a salt thereof, wherein D is D-1; $R^3$ is propyl, butyl or cyclopropylmethyl; and $R^4$ is propyloxy, propylthio or butyl.

Embodiment 2. The mixture of Embodiment 1 wherein in Formula **1**, G is taken together with the two contiguous linking carbon atoms to form a fused phenyl ring, or a pyridine ring having a carbon atom as the third ring member away from the ring member (identified by (b)) attached directly to D, or a thiophene ring having a carbon atom as the second ring member away from the ring member attached directly to D; when G forms a fused phenyl ring or pyridine ring, $R^1$ is attached to the third ring member away from the ring member attached directly to D; and when G forms a thiophene ring, $R^1$ is attached to the second ring member away from the ring member attached directly to D; $R^1$ is Cl, Br or I; and $R^2$ is hydrogen.

Embodiment 3. The mixture of Embodiment 2 wherein component (a) is selected from the group consisting of

6-bromo-3-propyl-2-propyloxy-4(3*H*)-quinazolinone (Compound 1),
6,8-diiodo-3-propyl-2-propyloxy-4(3*H*)-quinazolinone (Compound 2),
6-iodo-3-propyl-2-propyloxy-4(3*H*)-quinazolinone (Compound 3, proquinazid),
6-chloro-2-propoxy-3-propylthieno[2,3-*d*]pyrimidin-4(3*H*)-one (Compound 4),
2,3-dibutyl-6-chlorothieno[2,3-*d*]pyrimidin-4(3*H*)-one (Compound 5),
6-bromo-2-propoxy-3-propylthieno[2,3-*d*]pyrimidin-4(3*H*)-one (Compound 6),
7-bromo-2-propoxy-3-propylthieno[3,2,d]pyrimidin-4(3*H*)-one (Compound 7),
6-bromo-2-propoxy-3-propylpyrido[2,3-*d*]pyrimidin-4(3*H*)-one (Compound 8),
6,7-dibromo-2-propoxy-3-propylthieno[3,2-*d*]pyrimidin-4(3*H*)-one (Compound 9), and
3-(cyclopropylmethyl)-6-iodo-2-(propylthio)pyrido[2,3-*d*]pyrimidin-4(3*H*)-one (Compound 10).

Embodiment 4. The mixture of Embodiment 3 wherein component (a) is selected from the group consisting of

6-iodo-3-propyl-2-p ropyloxy-4(3*H*)-quinazolinone,
2,3-dibutyl-6-chlorothieno[2,3-*d*]pyrimidin-4(3*H*)-one, and

6-chloro-2-propoxy-3-propylthieno[2,3-*d*]pyrimidin-4(3*H*)-one.

Embodiment 5. The mixture of Embodiment 4 wherein component (a) is 6-iodo-3-propyl-2-propyloxy-4(3*H*)-quinazolinone.

Embodiment 6. The mixture described in the Summary of the Invention wherein component (a) is a compound of Formula **1** or a salt thereof, wherein D is D-2; $R^3$ is propyl or butyl; and $R^5$ is ethyl, propyl, 1-methylethyl, butyl, 1-methylbutyl, 3-butenyl or 2-butynyl.

Embodiment 7. The mixture of Embodiment 6 wherein in Formula **1**, G is taken together with the two contiguous linking carbon atoms to form a fused phenyl ring; $R^1$ is attached to the third ring member away from the ring member attached directly to D; $R^1$ is Cl, Br or I; and $R^2$ is hydrogen.

Embodiment 8. The mixture of Embodiment 7 wherein component (a) is selected from the group consisting of

2-butoxy-6-iodo-3-propyl-4*H*-1-benzopyran-4-one (Compound 11),
2-ethoxy-6-iodo-3-propyl-4*H*-1-benzopyran-4-one (Compound 12),
6-iodo-2-propoxy-3-propyl-4*H*-1-benzopyran-4-one (Compound 13),
2-(2-butynyloxy)-6-iodo-3-propyl-4*H*-1-benzopyran-4-one (Compound 14),
6-iodo-2-(1-methylbutoxy)-3-propyl-4*H*-1-benzopyran-4-one (Compound 15),
2-(3-butenyloxy)-6-iodo-3-propyl-4*H*-1-benzopyran-4-one (Compound 16), and
3-butyl-6-iodo-2-(1-methylethoxy)-4*H*-1-benzopyran-4-one (Compound 17).

Embodiment 9. The mixture of Embodiment 8 wherein component (a) is selected from the group consisting of

2-ethoxy-6-iodo-3-propyl-4*H*-1-benzopyran-4-one and
2-butoxy-6-iodo-3-propyl-4*H*-1-benzopyran-4-one.

Embodiment 10. The mixture described in the Summary of the Invention comprising as component (a) is a compound of Formula **1** or a salt thereof, wherein D is D-3; $R^3$ is propyl; and $R^6$ is methyl, ethyl or propyl.

Embodiment 11. The mixture of Embodiment 10 wherein in Formula **1**, G is taken together with the two contiguous linking carbon atoms to form a fused phenyl ring; $R^1$ is attached to the third ring member away from the ring member attached directly to D; $R^1$ is Cl, Br or I; and $R^2$ is hydrogen.

Embodiment 12. The mixture of Embodiment 11 wherein component (a) is 6-iodo-3-propyl-2*H*-1,3-benzoxazine-2,4(3*H*)-dione 2-(*O*-methyloxime) (Compound 18).

Also noteworthy as embodiments are fungicidal compositions of the present invention comprising a fungicidally effective amount of a mixture of Embodiments 1 to 12 and at least one additional component selected from the group consisting of surfactants, solid diluents and liquid diluents. Embodiments of the invention further include methods for controlling plant diseases caused by fungal plant pathogens comprising applying to the plant or portion thereof, or to the plant seed or seedling, a fungicidally effective amount of a mixture of Embodiments 1 to 12 (e.g., as a composition described herein). The preferred methods of use include those involving the above preferred compositions; and the diseases controlled with particular effectiveness include powdery mildew diseases. Combinations of fungicides used in accordance with this invention can facilitate disease control and retard resistance development.

Compositions according to the present invention are those where component (a) and component (b) are present in a fungicidally effective amount and the weight ratio of component (a) to component (b) is from 125:1 to 1:125. These compositions are particularly effective for controlling powdery mildew diseases. Of note are compositions where the weight ratio of component (a) to component (b) is from 25:1 to 12:5. Of particular note are compositions where the weight ratio of component (a) to component (b) is from 5:1 to 1:5.

Pyrimidinone fungicides of Formula **1** wherein D is D-1 are described in PCT Patent Publications WO 94/26722 and WO 99/14202 and U.S. Patent Nos. 6,066,638, 6,245,770, 6,262,058 and 6,277,858. The compounds of Formula **1** wherein D is D-1 can also be referred to as pyrimidin-4(3*H*)-ones fused at the 5- and 6-positions to G($R^1$)($R^2$) and substituted at the 2- and 3-positions with $R^4$ and $R^3$, respectively. Benzopyranone fungicides of Formula **1** wherein D is D-2 are described in PCT Patent Publication WO 03/014103. Benzoxazinone fungicides of Formula **1** wherein D is D-3 are described in PCT Patent Publication WO 02/094797. These references describe methods for preparation of compounds of Formula **1**. A method of preparation of the compound of Formula **2** is described in EP 897,904.

The compound of Formula **2** has the Chemical Abstracts name (3-bromo-6-methoxy-2-methylphenyl)(2,3,4-trimethoxy-6-methylphenyl)methanone (CAS Registry Number [220899-03-6]), the IUPAC name 3'-bromo-2,3,4,6'-tetramethoxy-2',6-dimethylbenzophenone and the common name metrafenone.

Tables 1 to 4 list specific compounds of Formula **1** useful in the fungicidal mixtures, compositions and methods of the present invention. These compounds are to be construed as illustrative and not limiting of the disclosure in any way.

The following abbreviations are used in the Tables which follow: *n* means normal, *i* means iso, *c* means cyclo, Pr means propyl, and Bu means butyl. The compound numbers of Tables 1 through 4 refer to compounds listed as Specific Embodiments in the Details of the Invention.

TABLE 1

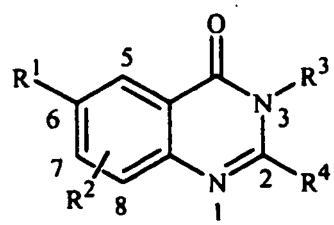

| Compound No. | $R^1$ | $R^2$ | $R^3$ | $R^4$ | Compound No. | $R^1$ | $R^2$ | $R^3$ | $R^4$ |
|---|---|---|---|---|---|---|---|---|---|
| | I | H | *n*-Pr | *n*-Pro | | I | H | *n*-Pr | *n*-PrS |
| | I | 8-1 | *n*-Pr | *n*-PrO | | I | H | *n*-Bu | *n*-PrO |
| 1 | Br | H | *n*-Pr | *n*-PrO | | I | 8-1 | *n*-Bu | *n*-PrO |
| | Cl | H | *n*-Pr | *n*-PrO | | Br | H | *n*-Bu | *n*-PrO |
| 3 | I | H | *n*-Pr | *n*-PrO | | Cl | H | *n*-Bu | *n*-PrO |
| | I | H | *n*-Pr | *n*-PrS | | I | H | *n*-Bu | *n*-PrO |
| 2 | I | 8-I | *n*-Pr | *n*-PrS | | I | H | *n*-Bu | *n*-PrS |
| | Br | H | *n*-Pr | *n*-PrS | | I | 8-1 | *n*-Bu | *n*-PrS |
| | Cl | H | *n*-Pr | *n*-PrS | | Br | H | *n*-Bu | *n*-PrS |
| | | | | | | Cl | H | *n*-Bu | *n*-PrS |
| | | | | | | I | H | *n*-Bu | *n*-PrS |

Table 2

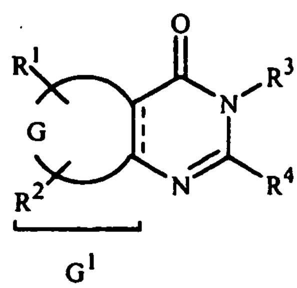

| Compound No. | $G^1$ (*) | $R^1$ | $R^2$ | $R^3$ | $R^4$ |
|---|---|---|---|---|---|
| 4 | 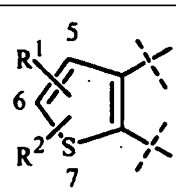 | 6-Cl | H | *n*-Pr | *n*-PrO |
| 5 | 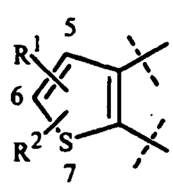 | 6-Cl | H | *n*-Bu | *n*-Bu |

(continued)

| Compound No. | $G^1$ (*) | $R^1$ | $R^2$ | $R^3$ | $R^4$ |
|---|---|---|---|---|---|
| 6 | 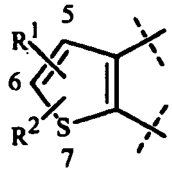 | 6-Br | H | *n*-Pr | *n*-PrO |
| | 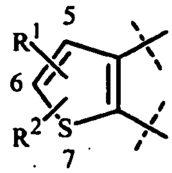 | 6-I | H | *n*-Pr | *n*-PrO |
| 7 | 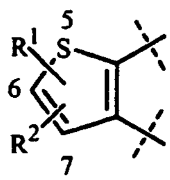 | 7-Br | H | *n*-Pr | *n*-PrO |
| 9 | 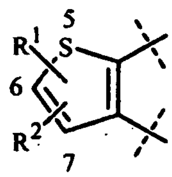 | 6-Br | 7-Br | *n*-Pr | *n*-PrO |
| 8 | 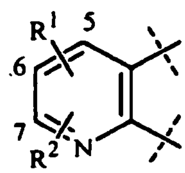 | 6-Br | H | *n*-Pr | *n*-PrO |
| 10 | 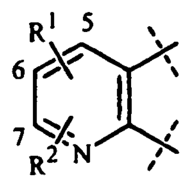 | 6-I | H | c-$PrCH_2$ | *n*-PrS |

(*) Note: $G^1$ is the portion of Formula **1** consisting of G and the two contiguous linking carbon atoms forming the fused ring.

Table 3

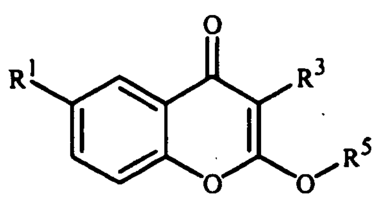

| Compound No. | $R^1$ | $R^3$ | $R^5$ | Compound No. | $R^1$ | $R^3$ | $R^5$ |
|---|---|---|---|---|---|---|---|
| | I | *n*-Pr | $CH_3$ | | Br | *n*-Pr | $CH_3$ |
| 12 | I | *n*-Pr | Et | | Br | *n*-Pr | Et |

(continued)

| Compound No. | $R^1$ | $R^3$ | $R^5$ | Compound No. | $R^1$ | $R^3$ | $R^5$ |
|---|---|---|---|---|---|---|---|
| 13 | I | *n*-Pr | *n*-Pr | | Br | *n*-Pr | *n*-Pr |
| | I | *n*-Pr | *i*-Pr | | Br | *n*-Pr | i-Pr |
| 11 | I | *n*-Pr | *n*-Bu | | Br | *n*-Pr | *n*-Bu |
| 14 | I | *n*-Pr | $CH_3C{\equiv}CCH_2$ | | Br | *n*-Pr | $CH_3C{\equiv}CCH_2$ |
| 15 | I | *n*-Pr | $CH_3CH_2CH_2CMeH$ | | Br | *n*-Pr | $CH_3CH_2CH_2CMeH$ |
| 16 | I | *n*-Bu | $CH_2{=}CHCH_2CH_2$ | | Br | *n*-Bu | $CH_2{=}CHCH_2CH_2$ |
| | I | *n*-Bu | $CH_3$ | | Br | *n*-Bu | $CH_3$ |
| | I | *n*-Bu | Et | | Br | *n*-Bu | Et |
| | I | *n*-Bu | *n*-Pr | | Br | *n*-Bu | *n*-Pr |
| 17 | I | *n*-Bu | *i*-Pr | | Br | *n*-Bu | i-Pr |
| | I | *n*-Bu | *n*-Bu | | Br | *n*-Bu | *n*-Bu |
| | I | *n*-Bu | $CH_3C{\equiv}CCH_2$ | | Br | *n*-Bu | $CH_3C{\equiv}CCH_2$ |
| | I | *n*-Bu | $CH_3CH_2CH_2CMeH$ | | Br | *n*-Bu | $CH_3CH_2CH_2CMeH$ |
| | I | *n*-Bu | $CH_2{=}CHCH_2CH_2$ | | Br | *n*-Bu | $CH_2{=}CHCH_2CH_2$ |

Table 4

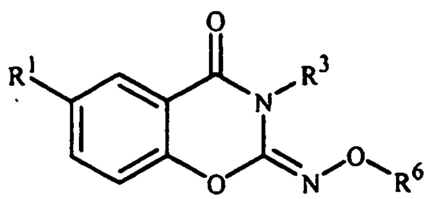

| Compound No. | $R^1$ | $R^3$ | $R^6$ | Compound No. | $R^1$ | $R^3$ | $R^6$ |
|---|---|---|---|---|---|---|---|
| | F | *n*-Pr | Me | | F | *n*-Bu | Me |
| | Cl | *n*-Pr | Me | | Cl | *n*-Bu | Me |
| | Br | *n*-Pr | Me | | Br | *n*-Bu | Me |
| 18 | I | *n*-Pr | Me | | I | *n*-Bu | Me |
| | F | *n*-Pr | Et | | F | *n*-Bu | Et |
| | Cl | *n*-Pr | Et | | Cl | *n*-Bu | Et |
| | Br | *n*-Pr | Et | | Br | *n*-Bu | Et |
| | I | *n*-Pr | Et | | I | *n*-Bu | Et |
| | F | *n*-Pr | *n*-Pr | | F | *n*-Bu | *n*-Pr |
| | Cl | *n*-Pr | *n*-Pr | | Cl | *n*-Bu | *n*-Pr |
| | Br | *n*-Pr | *n*-Pr | | Br | *n*-Bu | *n*-Pr |
| | I | *n*-Pr | *n*-Pr | | I | *n*-Bu | *n*-Pr |

Formulation/Utility

A mixture of this invention will generally be used to provide fungicidal active ingredients in compositions, i.e. formulations, with at least one additional component selected from the group consisting of surfactants, solid diluents and liquid diluents, which serves as a carrier. The formulation or composition ingredients are selected to be consistent with the physical properties of the active ingredients, mode of application and environmental factors such as soil type, moisture and temperature.

The mixtures of component (a) (i.e. the at least one compound of Formula **1**, *N*-oxides or salts thereof) with component (b) (i.e. the compound of Formula **2**) can be formulated in a number of ways:

(a) component (a) and component (b) can be formulated separately and applied separately or applied simultaneously in an appropriate weight ratio, e.g., as a tank mix; or

(b) component (a) and component (b) can be formulated together in the proper weight ratio.

Analogously, any optional active ingredients (e.g., selected frown (c1) to (c27) and salts thereof as described in the Summary of the Invention) can be formulated separately and applied separately or applied simultaneously with component (a) and component (b), or the optional active ingredients can be formulated with one or both of component (a) and component (b) in the appropriate weight ratios.

Useful formulations include both liquid and solid compositions. Liquid compositions include solutions (including emulsifiable concentrates), suspensions, emulsions (including microemulsions and/or suspoemulsions) and the like, which optionally can be thickened into gels. The general types of aqueous liquid compositions are soluble concentrate, suspension concentrate, capsule suspension, concentrated emulsion, microemulsion and suspo-emulsion. The general types of nonaqueous liquid compositions are emulsifiable concentrate, microemulsifiable concentrate, dispersible concentrate and oil dispersion.

The general types of solid compositions are dusts, powders, granules, pellets, prills, pastilles, tablets, filled films (including seed coatings) and the like, which can be water-dispersible ("wettable") or water-soluble. Films and coatings formed from film-forming solutions or flowable suspensions are particularly useful for seed treatment. Active ingredient can be (micro)encapsulated and further formed into a suspension or solid formulation; alternatively the entire formulation of active ingredient can be encapsulated (or "overcoated"). Encapsulation can control or delay release of the active ingredient. An emulsifiable granule combines the advantages of both an emulsifiable concentrate formulation and a dry granular formulation. High-strength compositions are primarily used as intermediates for further formulation.

Sprayable formulations are typically extended in a suitable medium before spraying. Such liquid and solid formulations are formulated to be readily diluted in the spray medium usually water. Spray volumes can range from about from about one to several thousand liters per hectare, but more typically are in the range from about ten to several hundred liters per hectare. Sprayable formulations can be tank mixed with water or another suitable medium for foliar treatment by aerial or ground application, or for application to the growing medium of the plant. Liquid and dry formulations can be metered directly into drip irrigation systems or metered into the furrow during planting. Liquid and solid formulations can be applied onto seeds of crops and other desirable vegetation as seed treatments before planting to protect developing roots and other subterranean plant parts and/or foliage through systemic uptake.

The formulations will typically contain effective amounts of active ingredient, diluent and surfactant within the following approximate ranges which add up to 100 percent by weight.

| | Weight Percent | | |
|---|---|---|---|
| | Active Ingredient | Diluent | Surfactant |
| Water-Dispersible and Water-soluble Granules, Tablets and Powders | 0.001-90 | 0-99.999 | 0-15 |
| Oil Dispersions, Suspensions, Emulsions, Solutions (including Emulsifiable Concentrates) | 1-50 | 40-99 | 0-50 |
| Dusts | 1-25 | 70-99 | 0-5 |
| Granules and Pellets | 0.001-99 | 5-99.999 | 0-15 |
| High Strength Compositions | 90-99 | 0-10 | 0-2 |

Solid diluents include, for example, clays such as bentonite, montmorillonite, attapulgite and kaolin, gypsum, cellulose, titanium dioxide, zinc oxide, starch, dextrin, sugars (e.g., lactose, sucrose), silica, talc, mica, diatomaceous earth, urea, calcium carbonate, sodium carbonate and bicarbonate, and sodium sulfate. Typical solid diluents are described in Watkins et al., Handbook of Insecticide Dust Diluents and Carriers, 2nd Ed., Dorland Books, Caldwell, New Jersey.

Liquid diluents include, for example, water, *N,N*-dimethylalkanamides (e.g., *N,N*-dimethylformamide), limonene, dimethyl sulfoxide, *N*-alkylpyrrolidones (e.g., *N*-methylpyrrolidinone), ethylene glycol, triethylene glycol, propylene glycol, dipropylene glycol, polypropylene glycol, propylene carbonate, butylene carbonate, paraffins (e.g., white mineral oils, normal paraffins, isoparaffins), alkylbenzenes, alkylnaphthalenes, glycerine, glycerol triacetate, sorbitol, triacetin, aromatic hydrocarbons, dearomatized aliphatics, alkylbenzenes, alkylnaphthalenes, ketones such as cyclohexanone, 2-heptanone, isophorone and 4-hydroxy-4-methyl-2-pentanone, acetates such as isoamyl acetate, hexyl acetate, heptyl acetate, octyl acetate, nonyl acetate, tridecyl acetate and isobornyl acetate, other esters such as alkylated lactate esters, dibasic esters and γ-butyrolactone, and alcohols, which can be linear, branched, saturated or unsaturated, such as methanol, ethanol, *n*-propanol, isopropyl alcohol, *n*-butanol, isobutyl alcohol, *n*-hexanol, 2-ethylhexanol, *n*-octanol, decanol, isodecyl alcohol, isooctadecanol, cetyl alcohol, lauryl alcohol, tridecyl alcohol, oleyl alcohol, cyclohexanol, tetrahydrofurfuryl alcohol, diacetone alcohol and benzyl alcohol. Liquid diluents also include glycerol esters of saturated and unsaturated fatty acids (typically $C_6$-$C_{22}$), such as plant seed and fruit oils (e.g., oils of olive, castor, linseed, sesame,

corn (maize), peanut, sunflower, grapeseed, safflower, cottonseed, soybean, rapeseed, coconut and palm kernel), animal-sourced fats (e.g., beef tallow, pork tallow, lard, cod liver oil, fish oil), and mixtures thereof. Liquid diluents also include alkylated fatty acids (e.g., methylated, ethylated, butylated) wherein the fatty acids may be obtained by hydrolysis of glycerol esters from plant and animal sources, and can be purified by distillation. Typical liquid diluents are described in Marsden, Solvents Guide, 2nd Ed., Interscience, New York, 1950.

The solid and liquid compositions of the present invention often include one or more surfactants. When added to a liquid, surfactants (also known as "surface-active agents") generally modify, most often reduce, the surface tension of the liquid. Depending on the nature of the hydrophilic and lipophilic groups in a surfactant molecule, surfactants can be useful as wetting agents, dispersants, emulsifiers or defoaming agents.

Surfactants can be classified as nonionic, anionic or cationic. Nonionic surfactants useful for the present compositions include, but are not limited to: alcohol alkoxylates such as alcohol alkoxylates based on natural and synthetic alcohols (which may be branched or linear) and prepared from the alcohols and ethylene oxide, propylene oxide, butylene oxide or mixtures thereof; amine ethoxylates, alkanolamides and ethoxylated alkanolamides; alkoxylated triglycerides such as ethoxylated soybean, castor and rapeseed oils; alkylphenol alkoxylates such as octylphenol ethoxylates, nonylphenol ethoxylates, dinonyl phenol ethoxylates and dodecyl phenol ethoxylates (prepared from the phenols and ethylene oxide, propylene oxide, butylene oxide or mixtures thereof); block polymers prepared from ethylene oxide or propylene oxide and reverse block polymers where the terminal blocks are prepared from propylene oxide; ethoxylated fatty acids; ethoxylated fatty esters and oils; ethoxylated methyl esters; ethoxylated tristyrylphenol (including those prepared from ethylene oxide, propylene oxide, butylene oxide or mixtures thereof); fatty acid esters, glycerol esters, lanolin-based derivatives, polyethoxylate esters such as polyethoxylated sorbitan fatty acid esters, polyethoxylated sorbitol fatty acid esters and polyethoxylated glycerol fatty acid esters; other sorbitan derivatives such as sorbitan esters; polymeric surfactants such as random copolymers, block copolymers, alkyd peg (polyethylene glycol) resins, graft or comb polymers and star polymers; polyethylene glycols (pegs); polyethylene glycol fatty acid esters; silicone-based surfactants; and sugar-derivatives such as sucrose esters, alkyl polyglycosides and alkyl polysaccharides.

Useful anionic surfactants include, but are not limited to: alkylaryl sulfonic acids and their salts; carboxylated alcohol or alkylphenol ethoxylates; diphenyl sulfonate derivatives; lignin and lignin derivatives such as lignosulfonates; maleic or succinic acids or their anhydrides; olefin sulfonates; phosphate esters such as phosphate esters of alcohol alkoxylates, phosphate esters of alkylphenol alkoxylates and phosphate esters of styryl phenol ethoxylates; protein-based surfactants; sarcosine derivatives; styryl phenol ether sulfate; sulfates and sulfonates of oils and fatty acids; sulfates and sulfonates of ethoxylated alkylphenols; sulfates of alcohols; sulfates of ethoxylated alcohols; sulfonates of amines and amides such as *N,N*-alkyltaurates; sulfonates of benzene, cumene, toluene, xylene, and dodecyl and tridecylbenzenes; sulfonates of condensed naphthalenes; sulfonates of naphthalene and alkyl naphthalene; sulfonates of fractionated petroleum; sulfosuccinamates; and sulfosuccinates and their derivatives such as dialkyl sulfosuccinate salts.

Useful cationic surfactants include, but are not limited to: amides and ethoxylated amides; amines such as *N*-alkyl propanediamines, tripropylenetriamines and dipropylenetetramines, and ethoxylated amines, ethoxylated diamines and propoxylated amines (prepared from the amines and ethylene oxide, propylene oxide, butylene oxide or mixtures thereof); amine salts such as amine acetates and diamine salts; quaternary ammonium salts such as quaternary salts, ethoxylated quaternary salts and diquaternary salts; and amine oxides such as alkyldimethylamine oxides and bis-(2-hydroxyethyl)-alkylamine oxides.

Also useful for the present compositions are mixtures of nonionic and anionic surfactants or mixtures of nonionic and cationic surfactants. Nonionic, anionic and cationic surfactants and their recommended uses are disclosed in a variety of published references including McCutcheon's Emulsifiers and Detergents, annual American and International Editions published by McCutcheon's Division, The Manufacturing Confectioner Publishing Co.; Sisely and Wood, Encyclopedia of Surface Active Agents, Chemical Publ. Co., Inc., New York, 1964; and A. S. Davidson and B. Milwidsky, Synthetic Detergents, Seventh Edition, John Wiley and Sons, New York, 1987.

Compositions of this invention may also contain formulation auxiliaries and additives, known to those skilled in the art as formulation aids (some of which may be considered to also function as solid diluents, liquid diluents or surfactants). Such formulation auxiliaries and additives may control: pH (buffers), foaming during processing (antifoams such polyorganosiloxanes), sedimentation of active ingredients (suspending agents), viscosity (thixotropic thickeners), in-container microbial growth (antimicrobials), product freezing (antifreezes), color (dyes/pigment dispersions), wash-off (film formers or stickers), evaporation (evaporation retardants), and other formulation attributes. Film formers include, for example, polyvinyl acetates, polyvinyl acetate copolymers, polyvinylpyrrolidone-vinyl acetate copolymer, polyvinyl alcohols, polyvinyl alcohol copolymers and waxes. Examples of formulation auxiliaries and additives include those listed in McCutcheon's Volume 2: Functional Materials, annual International and North American editions published by McCutcheon's Division, The Manufacturing Confectioner Publishing Co.; and PCT Publication WO 03/024222.

The compounds of Formulae **1** and **2** and any other active ingredients are typically incorporated into the present compositions by dissolving the active ingredient in a solvent or by grinding in a liquid or dry diluent. Solutions, including emulsifiable concentrates, can be prepared by simply mixing the ingredients. If the solvent of a liquid composition intended

for use as an emulsifiable concentrate is water-immiscible, an emulsifier is typically added to emulsify the active-containing solvent upon dilution with water. Active ingredient slurries, with particle diameters of up to 2,000 μm can be wet milled using media mills to obtain particles with average diameters below 3 μm. Aqueous slurries can be made into finished suspension concentrates (see, for example, U.S. 3,060,084) or further processed by spray drying to form water-dispersible granules. Dry formulations usually require dry milling processes, which produce average particle diameters in the 2 to 10 μm range. Dusts and powders can be prepared by blending and usually grinding (such as with a hammer mill or fluid-energy mill). Granules and pellets can be prepared by spraying the active material upon preformed granular carriers or by agglomeration techniques. See Browning, "Agglomeration", Chemical Engineering, December 4, 1967, pp 147-48, Perry's Chemical Engineer's Handbook, 4th Ed., McGraw-Hill, New York, 1963, pages 8-57 and following, and WO 91/13546. Pellets can be prepared as described in U.S. 4,172,714. Water-dispersible and water-soluble granules can be prepared as taught in U.S. 4,144,050, U.S. 3,920,442 and DE 3,246,493. Tablets can be prepared as taught in U.S. 5,180,587, U.S. 5,232,701 and U.S. 5,208,030. Films can be prepared as taught in GB 2,095,558 and U.S. 3,299,566.

For further information regarding the art of formulation, see T. S. Woods, "The Formulator's Toolbox - Product Forms for Modern Agriculture" in Pesticide Chemistry and Bioscience, The Food-Environment Challenge, T. Brooks and T. R. Roberts, Eds., Proceedings of the 9th International Congress on Pesticide Chemistry, The Royal Society of Chemistry, Cambridge, 1999, pp. 120-133. See also U.S. 3,235,361, Col. 6, line 16 through Col. 7, line 19 and Examples 10-41; U.S. 3,309,192, Col. 5, line 43 through Col. 7, line 62 and Examples 8, 12, 15, 39, 41, 52, 53, 58, 132, 138-140, 162-164, 166, 167 and 169-182; U.S. 2,891,855, Col. 3, line 66 through Col. 5, line 17 and Examples 1-4; Klingman, Weed Control as a Science, John Wiley and Sons, Inc., New York, 1961, pp 81-96; Hance et al., Weed Control Handbook, 8th Ed., Blackwell Scientific Publications, Oxford, 1989; and Developments in formulation technology, PJB Publications, Richmond, UK, 2000.

In the following Examples, all percentages are by weight and all formulations are prepared in conventional ways. Compound numbers refer to compounds in Tables 1-4. Without further elaboration, it is believed that one skilled in the art using the preceding description can utilize the present invention to its fullest extent. The following Examples are, therefore, to be constructed as merely illustrative, and not limiting of the disclosure in any way whatsoever. Percentages are by weight except where otherwise indicated.

Example A

<u>High Strength Concentrate</u>

| | |
|---|---|
| Compound 3 | 50.0% |
| metrafenone | 48.5% |
| silica aerogel | 0.5% |
| synthetic amorphous fine silica | 1.0% |

Example B

<u>Wettable Powder</u>

| | |
|---|---|
| Compound 3 | 50.0% |
| metrafenone | 15.0% |
| dodecylphenol polyethylene glycol ether | 2.0% |
| sodium ligninsulfonate | 4.0% |
| sodium silicoaluminate | 6.0% |
| montmorillonite (calcined) | 23.0% |

<u>Example C</u>

<u>Granule</u>

| | |
|---|---|
| Compound 1 | 8.0% |
| metrafenone | 2.0% |
| attapulgite granules (low volatile matter, 0.71/0.30 mm; U.S.S. No. 25-50 sieves) | 90.0% |

Example D

Extruded Pellet

| | |
|---|---|
| Compound 2 | 13.0% |
| metrafenone | 12.0% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0% |

Example E

Emulsifiable Concentrate

| | |
|---|---|
| Compound 3 | 5.0% |
| metrafenone | 5.0% |
| polyoxyethylene sorbitol hexoleate | 20.0% |
| $C_6$-$C_{10}$ fatty acid methyl ester | 70.0% |

Example F

Microemulsion

| | |
|---|---|
| Compound 4 | 4.0% |
| metrafenone | 1.0% |
| polyvinylpyrrolidone-vinyl acetate copolymer | 30.0% |
| alkylpolyglycoside | 30.0% |
| glyceryl monooleate | 15.0% |
| water | 20.0% |

Example G

Seed Treatment

| | |
|---|---|
| Compound 1 | 10.00% |
| metrafenone | 10.00% |
| polyvinylpyrrolidone-vinyl acetate copolymer | 5.00% |
| montan acid wax | 5.00% |
| calcium ligninsulfonate | 1.00% |

(continued)

| | |
|---|---|
| polyoxyethylene/polyoxypropylene block copolymers | 1.00% |
| stearyl alcohol (POE 20) | 2.00% |
| polyorganosilane | 0.20% |
| colorant red dye | 0.05% |
| water | 65.75% |

Mixtures of component (a) with component (b) can be further mixed with one or more other biologically active compounds or agents including fungicides, insecticides, nematocides, bactericides, acaricides, herbicides, herbicide safeners, growth regulators such as insect molting inhibitors and rooting stimulants, chemosterilants, semiochemicals, repellents, attractants, pheromones, feeding stimulants, plant nutrients, other biologically active compounds or entomopathogenic bacteria, virus or fungi to form a multi-component pesticide giving an even broader spectrum of agricultural protection. Thus the present invention also pertains to a composition comprising a fungicidally effective amount of a mixture of component (a) with component (b), wherein the weight ratio of component (b) to component (a) is from 125: 1 to 1:125 and a biologically effective amount of at least one additional biologically active compound or agent and can further comprise at least one of a surfactant, a solid diluent or a liquid diluent. The other biologically active compounds or agents can also be separately formulated in compositions comprising at least one of a surfactant, solid or liquid diluent. For mixtures of the present invention, one or more other biologically active compounds or agents can be formulated together with one or both of components (a) and (b) to form a premix, or one or more other biologically active compounds or agents can be formulated separately from components (a) and (b) and the formulations combined together before application (e.g., in a spray tank) or, alternatively, applied in succession.

Examples of such biologically active compounds or agents with which mixtures of component (a) with component (b) can be formulated are: insecticides such as abamectin, acephate, acetamiprid, amidoflumet (S-1955), avermectin, azadirachtin, azinphos-methyl, bifenthrin, bifenazate, buprofezin, carbofuran, cartap, chlorantraniliprole (DPX-E2Y45), chlorfenapyr, chlorfluazuron, chlorpyrifos, chlorpyrifos-methyl, chromafenozide, clothianidin, cyflumetofen, cyfluthrin, beta-cyfluthrin, cyhalothrin, lambda-cyhalothrin, cypermethrin, cyromazine, deltamethrin, diafenthiuron, diazinon, dieldrin, diflubenzuron, dimefluthrin, dimethoate, dinotefuran, diofenolan, emamectin, endosulfan, enestroburin (SYP-Z071), esfenvalerate, ethiprole, fenothiocarb, fenoxycarb, fenpropathrin, fenvalerate, fipronil, flonicamid, flubendiamide, flucythrinate, tau-fluvalinate, flufenerim (UR-50701), flufenoxuron, fonophos, halofenozide, hexaflumuron, hydramethylnon, imidacloprid, indoxacarb, isofenphos, lufenuron, malathion, metaflumizone, metaldehyde, methamidophos, methidathion, methomyl, methoprene, methoxychlor, metofluthrin, monocrotophos, methoxyfenozide, nitenpyram, nithiazine, novaluron, noviflumuron (XDE-007), oxamyl, parathion, parathion-methyl, permethrin, phorate, phosalone, phosmet, phosphamidon, pirimicarb, profenofos, profluthrin, pymetrozine, pyrafluprole, pyrethrin, pyridalyl, pyrifluquinazon, pyriprole, pyriproxyfen, rotenone, ryanodine, spinetoram, spinosad, spirodiclofen, spiromesifen (BSN 2060), spirotetramat, sulprofos, tebufenozide, teflubenzuron, tefluthrin, terbufos, tetrachlorvinphos, thiacloprid, thiamethoxam, thiodicarb, thiosultap-sodium, tralomethrin, triazamate, trichlorfon and triflumuron; fungicides such as acibenzolar-S-methyl, aldimorph, amisulbrom, anilazine, azaconazole, azoxystrobin, benalaxyl, benalaxyl-M, benodanil, benomyl, benthiavalicarb, benthiavalicarb-isopropyl, bethoxazin, binapacryl, biphenyl, bitertanol, bixafen, blasticidin-S, Bordeaux mixture (tribasic copper sulfate), boscalid, bromuconazole, bupirimate, carboxin, carpropamid, captafol, captan, carbendazim, chloroneb, chlorothalonil, chlozolinate, clotrimazole, copper oxychloride, copper salts such as copper sulfate and copper hydroxide, cyazofamid, cyflufenamid, cymoxanil, cyproconazole, cyprodinil, dichlofluanid, diclocymet, diclomezine, dicloran, diethofencarb, difenoconazole, diflumetorim, dimethirimol, dimethomorph, dimoxystrobin, diniconazole, diniconazole-M, dinocap, dithianon, dodemorph, dodine, edifenphos, enestroburin, epoxiconazole, ethaboxam, etridiazole, famoxadone, fenamidone, fenarimol, fenbuconazole, fenfuram, fenhexamid, fenoxanil, fenpiclonil, fenpropidin, fenpropimorph, fentin acetate, fentin chloride, fentin hydroxide, ferbam, ferimzone, fluazinam, fludioxonil, flumetover, flumorph, fluopicolide, fluopyram, fluoroimide, fluoxastrobin, fluquinconazole, flusilazole, flusulfamide, flutolanil, flutriafol, folpet, fosetyl-aluminum, fuberidazole, furalaxyl, furametpyr, hexaconazole, hymexazol, guazatine, imazalil, imibenconazole, iminoctadine, iodocarb, ipconazole, iprobenfos, iprodione, iprovalicarb, isoprothiolane, isotianil, kasugamycin, kresoxim-methyl, mancozeb, mandipropamid, maneb, mepronil, meptyldinocap, metalaxyl, metalaxyl-M, metconazole, methasulfocarb, metiram, metominostrobin, mepanipyrim, metrafenone, myclobutanil, naftifine, neo-asozin (ferric methanearsonate), nuarimol, octhilinone, ofurace, orysastrobin, oxadixyl, oxolinic acid, oxpoconazole, oxycarboxin, oxytetracycline, penconazole, pencycuron, penthiopyrad, pefurazoate, phosphorous acid and salts, phthalide, picobenzamid, picoxystrobin, piperalin, polyoxin, probenazole, prochloraz, procymidone, propamocarb, propamocarb-hydrochloride, propiconazole, propineb, proquinazid, prothioconazole, pyraclostrobin, pryazophos, pyribencarb, pyrifenox, pyrimethanil, pyrolnitrine, pyroquilon, quinomethionate, quinoxyfen, quintozene, silthiofam, simeconazole, spiroxamine, streptomycin, sulfur, tebuconazole, tecloftalam, tecnazene, terbinafine, tetraconazole, thiabendazole, thifluzamide, thiophanate, thiophanate-methyl, thiram, tiadinil, tolclofos-methyl, tolyfluanid, triadimefon, triadimenol, triazoxide, tricyclazole, tridemorph, triflumizole, tricyclazole, trifloxystrobin, triforine, triticonazole, uniconazole, validamycin, valiphenal, vinclozolin, zineb, ziram, zoxamide, 5-chloro-6-(2,4,6-trifluorophenyl)-7-(4-methylpiperidin-1-yl)[1,2,4]triazolo[1,5-*a*]pyrimidine, *N*-[2-(1,3-dimethylbutyl)phenyl]-5-fluoro-1,3-dimethyl-1*H*-pyrazol-4-carboxamide, *N*-[2-[4-[[3-(4-chlorophenyl)-2-propyn-1-yl]oxy]-3-methoxyphenyl]ethyl]-3-methyl-2-[(methylsulfonyl)amino]butanamide, *N*-[2-[4-[[3-(4-chlorophenyl)-2-propyn-1-yl]oxy]-3-methoxyphenyl]ethyl]-3-methyl-2-[(ethylsulfonyl)amino]butanamide, 2-butoxy-6-iodo-3-propyl-4*H*-1-benzopyran4-one, 3-[5-(4-chlorophenyl)-2,3-dimethyl-3-isoxazolidinyl]-pyridine, 4-fluorophenyl *N*-[1-[[[1-(4-cyanophenyl)ethyl]sulfonyl]methyl]propyl]carbamate, *N*-[[(cyclopropylmethoxy)amino][6-(difluoromethoxy)-2,3-difluorophenyl]methylene]-benzeneacetamide, α-[methoxyimino]-*N*-methyl-2-[[[1-[3-(difluoromethyl)phenyl]ethoxy]-imino]methyl]benzeneacetamide, *N'*-[4-[4-chloro-3-(trifluoromethyl)phenoxy]-2,5-dimethylphenyl]-*N*-ethyl-*N*-methylinethanimidamide, 2-[[2-fluoro-5-(trifluoromethyl)-phenyl]thio]-2-[3-(2-methoxyphenyl)-2-thiazolidinylidene]acetonitrile, *N*-[2-(1*S*,2*R*)-[1,1'-bicyclopropyl]-2-ylphenyl]-3-(difluoromethyl)-1-methyl-1*H*-pyrazole-4-carboxamide, and *N*-(4-chloro-2-nitrophenyl)-*N*-ethyl-4-methylbenzenesulfonamide; nematocides such as aldicarb, imicyafos, oxamyl and fenamiphos; bactericides such as streptomycin; acaricides such as amitraz, chinomethionat, chlorobenzilate, cyhexatin, dicofol, dienochlor, etoxazole, fenazaquin, fenbutatin oxide, fenpropathrin, fenpyroximate, hexythiazox, propargite, pyridaben and tebufenpyrad; and biological agents including entomopathogenic bacteria, such as *Bacillus thuringiensis* subsp. *aizawai, Bacillus thuringiensis* subsp. *kurstaki,* and the encapsulated delta-endotoxins of *Bacillus thuringiensis* (e.g., Cellcap, MPV, MPVII); entomopathogenic fungi, such as green muscardine fungus; and entomopathogenic virus including baculovirus, nucleopolyhedro virus (NPV) such as HzNPV, AfNPV; and granulosis virus (GV) such as CpGV.

Mixtures of this invention and compositions thereof can be applied to plants genetically transformed to express proteins toxic to invertebrate pests (such as *Bacillus thuringiensis* delta-endotoxins). The effect of the exogenously applied fungicidal mixtures of this invention may be synergistic with the expressed toxin proteins.

General references for agricultural protectants (i.e. insecticides, fungicides, nematocides, acaricides, herbicides and biological agents) include The Pesticide Manual, 13th Edition, C. D. S. Tomlin, Ed., British Crop Protection Council, Farnham, Surrey, U.K., 2003 and The BioPesticide Manual, 2nd Edition, L. G. Copping, Ed., British Crop Protection Council, Farnham, Surrey, U.K., 2001.

For embodiments where one or more of these various mixing partners are used, the weight ratio of these various mixing partners (in total) to the mixture of component (a) with component (b) is typically between about 1:100 and about 3000:1. Of note are weight ratios between about 1:30 and about 300:1 (for example ratios between about 1:1 and about 30:1). It will be evident that including these additional components may expand the spectrum of diseases controlled beyond the spectrum controlled by a mixture of component (a) with component (b).

Compounds of component (a) (Formula **1**, e.g., 6-iodo-3-propyl-2-propyloxy-4(3*H*)-quinazolinone, Compound 3) of this invention are considered to control plant pathogens via potent, differentiation-specific, inhibition of the infection process. Of note are combinations of a compound of Formula **1** and the compound of Formula **2** with at least one other fungicide. In certain instances, combinations with other fungicides having a different mode of action will be particularly advantageous for resistance management (especially if the other fungicide also has a similar spectrum of control). Of particular note are compositions which in addition to component (a) and component (b) include (c) at least one compound selected from the group consisting of: (c1) alkylenebis(dithiocarbamate) fungicides; (c2) cymoxanil; (c3) phenylamide fungicides; (c4) chlorothalonil; (c5) carboxamides acting at complex II of the fungal mitochondrial respiratory electron transfer site; (c6) quinoxyfen; (c7) 5-chloro-6-(2,4,6-trifluorophenyl)-7-(4-methylpiperidin-1-yl)[1,2,4]triazolo[1,5-*a*]pyrimidine; (c8) cyflufenamid; (c9) cyprodinil; (c10) copper compounds; (c11) phthalimide fungicides; (c12) fosetyl-aluminum; (c13) benzimidazole fungicides; (c14) cyazofamid; (c15) fluazinam; (c16) iprovalicarb; (c17) propamocarb; (c18) validomycin; (c19) dichlorophenyl dicarboximide fungicides; (c20) zoxamide; (c21) fluopicolide; (c22) mandipropamid; (c23) carboxylic acid amides acting on phospholipid biosynthesis and cell wall deposition; (c24) dimethomorph; (c25) non-DMI sterol biosynthesis inhibitors; (c26) inhibitors of demethylase in sterol biosynthesis; (c27) $bc_1$ complex fungicides; and salts of compounds of (c1) through (c27). Further descriptions of (c) groups corresponding to classes of fungicidal compounds are provided below.

Inhibitors of Demethylase in Sterol Biosynthesis (c26)

Sterol biosynthesis inhibitors control fungi by inhibiting enzymes in the sterol biosynthesis pathway. Demethylase-inhibiting fungicides have a common site of action within the fungal sterol biosynthesis pathway, involving inhibition of demethylation at position 14 of lanosterol or 24-methylene dihydrolanosterol, which are precursors to sterols in fungi. Compounds acting at this site are often referred to as demethylase inhibitors, DMI fungicides, or DMIs. The demethylase enzyme is sometimes referred to by other names in the biochemical literature, including cytochrome P-450 (14DM). The demethylase enzyme is described in, for example, J. Biol. Chem. 1992, 267, 13175-79 and references cited therein. DMI fungicides are divided between several chemical classes: azoles (including triazoles and imidazoles), pyrimidines, piperazines and pyridines. The triazoles include azaconazole, bromuconazole, cyproconazole, difenoconazole, diniconazole (including diniconazole-M), epoxiconazole, etaconazole, fenbuconazole, fluquinconazole, flusilazole, flutriafol, hexaconazole, imibenconazole, ipconazole, metconazole, myclobutanil, penconazole, propiconazole, prothioconazole, quinconazole, simeconazole, tebuconazole, tetraconazole, triadimefon, triadimenol, triticonazole and uniconazole. The imidazoles include clotrimazole, econazole, imazalil, isoconazole, miconazole, oxpoconazole, prochloraz and triflumizole. The pyrimidines include fenarimol, nuarimol and triarimol. The piperazines include triforine. The pyridines include buthiobate and pyrifenox. Biochemical investigations have shown that all of the above mentioned fungicides are DMI fungicides as described by K. H. Kuck et al. in Modern Selective Fungicides - Properties, Applications and Mechanisms of Action, H. Lyr (Ed.), Gustav Fischer Verlag: New York, 1995, 205-258.

*$Ac_1$* Complex Fungicides (c27)

*$bc_1$* Complex Fungicides have a fungicidal mode of action which inhibits the *$bc_1$* complex in the mitochondrial respiration chain. The *$bc_1$* complex is sometimes referred to by other names in the biochemical literature, including complex III of the electron transfer chain, and ubihydroquinone:cytochrome c oxidoreductase. This complex is uniquely identified by Enzyme Commission number EC1.10.2.2. The *$bc_1$* complex is described in, for example, J. Biol. Chem. 1989, 264, 14543-48; Methods Enzymol. 1986, 126, 253-71; and references cited therein. Strobilurin fungicides such as azoxystrobin, dimoxystrobin, enestroburin (SYP-Z071), fluoxastrobin, kresoxim-methyl, metominostrobin, orysastrobin, picoxystrobin, pyraclostrobin and trifloxystrobin are known to have this mode of action (H. Sauter et al., Angew. Chem. Int. Ed. 1999, 38, 1328-1349). Other fungicidal compounds that inhibit the *$bc_1$* complex in the mitochondrial respiration chain include famoxadone and fenamidone.

Other Fungicide Group

Alkylenebis(dithiocarbamate)s (c1) include compounds such as mancozeb, maneb, propineb and zineb.
Phenylamides (c3) include compounds such as metalaxyl, benalaxyl, furalaxyl and oxadixyl.
Carboxamides (c5) include compounds such as boscalid, carboxin, fenfuram, flutolanil, furametpyr, mepronil, oxycarboxin, thifluzamide, penthiopyrad, and *N*-[2-(1,3-dimethylbutyl)phenyl]-5-fluoro-1,3-dimethyl-1*H*-pyrazole-4-carboxamide (PCT Patent Publication WO 2003/010149), and are known to inhibit mitochondrial function by disrupting complex II (succinate dehydrogenase) in the respiratory electron transport chain.
Copper compounds (c10) include compounds such as copper oxychloride, copper sulfate and copper hydroxide, including compositions such as Bordeaux mixture (tribasic copper sulfate).
Phthalimides (c11) include compounds such as folpet and captan.
Benzimidazole fungicides (c13) include benomyl and carbendazim.
Dichlorophenyl dicarboximide fungicides (c19) include chlozolinate, dichlozoline, iprodione, isovaledione, myclozolin, procymidone and vinclozolin.
Carboxylic acid amides acting on phospholipid biosynthesis and cell wall deposition (c23) are proposed to inhibit phospholipid biosynthesis and cell wall deposition. Inhibition of these processes prevents growth and leads to death of the target fungus. Examples include - benthiavalicarb, benthiavalicarb-isopropyl, iprovalicarb, valiphenal and flumorph.
Non-DMI sterol biosynthesis inhibitors (c25) include morpholine and piperidine fungicides. The morpholines and piperidines are sterol biosynthesis inhibitors that have been shown to inhibit steps in the sterol biosynthesis pathway at a point later than the inhibitions achieved by the DMI sterol biosynthesis (c26). The morpholines include aldimorph, dodemorph, fenpropimorph, tridemorph and trimorphamide. The piperidines include fenpropidin.
Of note are combinations of component (a) (e.g., 6-iodo-3-propyl-2-propyloxy-4(3*H*)-quinazolinone, Compound 3) and component (b) (i.e. metrafenone) with azoxystrobin, fluoxastrobin, kresoxim-methyl, trifloxystrobin, pyraclostrobin, picoxystrobin, dimoxystrobin (SSF-129), metominostrobin/ fenominostrobin (SSF-126), carbendazim, chlorothalonil, cyprodinil, quinoxyfen, cyflufenamid, fenpropidine, fenpropimorph, spiroxamine, bromuconazole, cyproconazole, difenoconazole, epoxiconazole, fenbuconazole, fluquinconazole, flusilazole, hexaconazole, ipconazole, metconazole, penconazole, propiconazole, tebuconazole, triticonazole, prochloraz or nicobifen.
Preferred for better control of plant diseases caused by fungal plant pathogens (e.g., lower use rate or broader spectrum of plant pathogens controlled) or resistance management are mixtures of component component (a) (e.g., 6-iodo-3-propyl-2-propyloxy-4(3*H*)-quinazolinone, Compound 3) and component (b) (i.e. metrafenone) with a fungicide selected from the group consisting of azoxystrobin, kresoxim-methyl, trifloxystrobin, pyraclostrobin, picoxystrobin, dimoxystrobin (SSF-129), metominostrobin/ fenominostrobin (SSF-126), quinoxyfen, cyflufenamid, fenpropidine, fenpropimorph, spiroxamine, cyproconazole, epoxiconazole, fluquinconazole, flusilazole, metconazole, propiconazole, tebuconazole and triticonazole.
The mixtures of this invention are useful as plant disease control agents. The present invention therefore further comprises a method for controlling plant diseases caused by fungal plant pathogens comprising applying to the plant

or portion thereof to be protected, or to the plant seed to be protected, an effective amount of a mixture of the invention or a fungicidal composition comprising said mixture.

Plant disease control is ordinarily accomplished by applying an effective amount of a mixture of this invention, typically as a formulated composition, either pre- or post-infection, to the portion of the plant to be protected such as the roots, stems, foliage, fruit, seeds, tubers or bulbs, or to the media (soil or sand) in which the plants to be protected are growing. The mixtures can also be applied to seeds to protect the seeds and seedlings developing from the seeds. The mixtures can also be applied through irrigation water to treat plants.

Rates of application for these mixtures and compositions of this invention can be influenced by many factors of the environment and should be determined under actual use conditions. Foliage can normally be protected when treated at a rate of from less than about 1 g/ha to about 5,000 g/ha of active ingredients. Seed and seedlings can normally be protected when seed is treated at a rate of from about 0.1 to about 10 g per kilogram of seed.

The mixtures and/or compositions of this invention provide control of diseases caused by a broad spectrum of fungal plant pathogens in the Basidiomycete, Ascomycete, Oomycete and Deuteromycete classes. They are effective in controlling a broad spectrum of plant diseases, particularly foliar pathogens of ornamental, turf, vegetable, field, cereal, and fruit crops. These pathogens include: Oomycetes, including *Phytophthora* diseases such as *Phytophthora infestans, Phytophthora megasperma, Phytophthora parasitica, Phytophthora cinnamomi* and *Phytophthora capsici, Pythium* diseases such as *Pythium aphanidermatum,* and diseases in the Peronosporaceae family such as *Plasmopara viticola, Peronospora* spp. (including *Peronospora tabacina* and *Peronospora parasitica), Pseudoperonospora* spp. (including *Pseudoperonospora cubensis)* and *Bremia lactucae;* Ascomycetes, including *Alternaria* diseases such as *Alternaria solani* and *Alternaria brassicae, Guignardia* diseases such as *Guignardia bidwell, Venturia* diseases such as *Venturia inaequalis, Septoria* diseases such as *Septoria nodorum* and *Septoria tritici,* powdery mildew diseases such as *Erysiphe* spp. (including *Erysiphe graminis* and *Erysiphe polygoni*), *Uncinula necatur, Sphaerotheca fuligena* and *Podosphaera leucotricha, Pseudocercosporella herpotrichoides, Botrytis* diseases such as *Botrytis cinerea, Monilinia fructicola, Sclerotinia* diseases such as *Sclerotinia sclerotiorum, Magnaporthe grisea, Phomopsis viticola, Helminthosporium* diseases such as *Helminthosporium tritici repentis, Pyrenophora teres,* anthracnose diseases such as *Glomerella* or *Colletotrichum* spp. (such as *Colletotrichum graminicola* and *Colletotrichum orbiculare*)*,* and *Gaeumannomyces graminis;* Basidiomycetes, including rust diseases caused by *Puccinia* spp. (such as *Puccinia recondita, Puccinia striiformis, Puccinia hordei, Puccinia graminis* and *Puccinia arachidis*)*, Hemileia vastatrix* and *Phakopsora pachyrhizi*; other pathogens including *Rhizoctonia* spp. (such as *Rhizoctonia solani*); *Fusarium* diseases such as *Fusarium roseum, Fusarium graminearum* and *Fusarium oxysporum*; *Verticillium dahliae; Sclerotium rolfsii*; *Rynchosporium secalis*; *Cercosporidium personatum, Cercospora arachidicola* and *Cercospora beticola*; and other genera and species closely related to these pathogens. In addition to their fungicidal activity, the compositions or combinations also have activity against bacteria such as *Erwinia amylovora, Xanthomonas campestris, Pseudomonas syringae,* and other related species.

The present mixtures and their formulated compositions are particularly effective in controlling powdery mildew diseases caused by fungal plant pathogens. Powdery mildew diseases include powdery mildews in pome fruit, stone fruit, citrus fruit, soft fruit, vines (including grapes), cotton, cucurbits, ornamental plants, tobacco, hops, strawberries and some vegetables, and American gooseberry mildew in gooseberries and currants. Of note are methods for controlling wheat powdery mildew which comprise applying a mixture of this invention, typically as formulated composition. The fungal pathogens causing these diseases include *Erysiphe graminis* (the causative agent for cereal powdery mildews in cereal crops such as wheat, oats and barley), *Uncinula necatur* (the causative agent for powdery mildew in grapes), *Sphaerotheca fuliginea* (the causative agent for powdery mildew in cucurbits) and related powdery mildews in the *Erysiphe, Sphaerotheca, Microsphaera* and *Podosphaera* genera. Of note are methods for controlling *Erysiphe graminis* which comprise applying a mixture of this invention. Particularly when component (a) and component (b) are mixed with additional fungicidal components (e.g., component (c) as described in the Summary of the Invention), the mixtures of this invention can also provide control of diseases caused by a broader spectrum of fungal plant pathogens in the Basidiomycete, Ascomycete, Oomycete and Deuteromycete classes. They can be effective in controlling a broad spectrum of plant diseases, particularly foliar pathogens of ornamental, vegetable, field, cereal, and fruit crops. These pathogens include *Plasmopara viticola. Phytophthora infestans, Peronospora tabacina, Pseudoperonospora cubensis, Pythium aphanidermatum, Alternaria brassicae, Septoria nodorum, Septoria tritici, Cercosporidium personatum, Cercospora arachidicola, Pseudocercosporella herpotrichoides, Cercospora beticola, Botrytis cinerea, Monilinia fructicola, Pyricularia oryzae, Podosphaera leucotricha, Venturia inaequalis, Erysiphe graminis, Uncinula necatur, Puccinia recondita, Puccinia graminis, Hemileia vastatrix, Puccinia striiformis, Puccinia arachidis, Rhizoctonia solani, Sphaerotheca fuliginea, Fusarium oxysporum, Verticillium dahliae, Pythium aphanidermatum, Phytophthora megasperma, Sclerotinia sclerotiorum, Sclerotium rolfsii, Erysiphe polygoni, Pyrenophora teres, Gaeumannomyces graminis, Rynchosporium secalis, Fusarium roseum, Bremia lactucae* and other fungal species closely related to these pathogens.

Mixtures of fungicides may provide significantly better disease control than could be predicted based on the activity of the individual components. This synergism has been described as "the cooperative action of two components of a mixture, such that the total effect is greater or more prolonged than the sum of the effects of the two (or more) taken

independently" (see Tames, P. M. L., Neth. J. Plant Pathology, (1964), 70, 73-80).

Compositions are provided in accordance with this invention that comprise proportions of component (a) and component (b) that are especially useful for controlling particular fungal diseases. These compositions are considered especially useful for controlling wheat powdery mildew (*Erysiphe graminis*).

BIOLOGICAL EXAMPLES OF THE INVENTION

To illustrate the remarkable synergistic efficacy of mixtures of a compound of Formula *1* with the compound of Formula **2** for fungal disease control, mixtures of formulated proquinazid and metrafenone were tested for control of wheat powdery mildew.

Composition 1

| Ingredients | Wt. % |
|---|---|
| Formula **1** Technical Material (Compound 3, Proquinazid) | 21.1 |
| Methylated seed oil | 68.6 |
| Anionic/nonionic emulsifier blend | 10.3 |

Composition 2

| Ingredients | Wt. % |
|---|---|
| Formula **2** Technical Material (Metrafenone) | 25.2 |
| Solvents | 50.0 |
| Emulsifiers(s) | 24.8 |

Test compositions were first mixed with purified water. The resulting test suspensions were then used in the following tests. Test suspensions were sprayed to the point of run-off on the test plants at the equivalent rates of 0.0016, 0.008, 0.04, 0.2, 1, or 5 g/ha of the active ingredient. The tests were replicated three times and the results reported as the mean average of the three replicates.

The presence of a synergistic effect between two active ingredients was established with the aid of the Colby equation (see Colby, S. R. "Calculating Synergistic and Antagonistic Responses of Herbicide Combinations", Weeds, (1967), 15, 20-22):

$$p = A + B - \left[\frac{A \times B}{100}\right].$$

Using the method of the Colby, the presence of a synergistic interaction between two active ingredients is established by first calculating the predicted activity, p, of the mixture based on activities of the two components applied alone. If p is lower than the experimentally established effect, synergism has occurred. In the equation above, A is the fungicidal activity in percentage control of one component applied alone at rate x. The B term is the fungicidal activity in percentage control of the second component applied at rate y. The equation estimates p, the expected fungicidal activity of the mixture of A at rate x with B at rate y if their effects are strictly additive and no interaction has occurred.

TEST A

Wheat seedlings were inoculated with a spore dust of *Erysiphe graminis* f. sp. *tritici,* (the causal agent of wheat powdery mildew) and incubated in a growth chamber at 20 ˚C for 48 h. The test suspensions were then sprayed to the point of run-off on the wheat seedlings. The following day the seedlings were moved and incubated in a growth chamber

at 20 ˚C for 5 days, after which time disease ratings were made.

TEST B

The test suspensions were sprayed to the point of run-off on wheat seedlings. The following day the seedlings were inoculated with a spore dust of *Erysiphe graminis* f. sp. *tritici,* (the causal agent of wheat powdery mildew) and incubated in a growth chamber at 20 ˚C for 7 days, after which time disease ratings were made.

TEST C

The test suspensions were sprayed to the point of run-off on wheat seedlings. Five days later, the seedlings were inoculated with a spore dust of *Erysiphe graminis* f. sp. *tritici,* (the causal agent of wheat powdery mildew) and incubated in a growth chamber at 20 ˚C for 7 days, after which time disease ratings were made.

Results for Tests A to C are given in Table A. In the table, a rating of 100 indicates 100 % disease control and a rating of 0 indicates no disease control (relative to the controls). Columns labeled "Obsd" indicate the average of results observed from three replications. Columns labeled "Exp" indicate the expected value for each treatment mixture using the Colby equation. Tests demonstrating control greater than expected are indicated with *.

Table A

Observed and Expected Effects of Proquinazid and Metrafenone Alone and Mixtures in Controlling Wheat Powdery Mildew.

| Composition Number | Rate | Test A | | Test B | | Test C | |
|---|---|---|---|---|---|---|---|
| | | Obsd | Exp | Obsd | Exp | Obsd | Exp |
| 1 | 0.0016 | 0 | - | 76 | - | 43 | - |
| 1 | 0.008 | 0 | - | 84 | - | 35 | - |
| 1 | 0.04 | 0 | - | 88 | - | 43 | - |
| 1 | 0.2 | 0 | - | 98 | - | 64 | - |
| 1 | 1 | 0 | - | 100 | - | 84 | - |
| 2 | 0.0016 | 0 | - | 91 | - | 0 | - |
| 2 | 0.008 | 0 | - | 100 | - | 0 | - |
| 2 | 0.04 | 0 | - | 100 | - | 69 | - |
| 2 | 0.2 | 39 | - | 100 | - | 84 | - |
| 2 | 1 | 98 | - | 100 | - | 99 | - |
| 1 + 2 | 0.008 + 0.0016 | 0 | 0 | 87 | 99 | 21 | 35 |
| 1 + 2 | 0.008 + 0.008 | 0 | 0 | 88 | 100 | 0 | 35 |
| 1 + 2 | 0.008 + 0.04 | 0 | 0 | 92 | 100 | 27 | 80 |
| 1 + 2 | 0.008 + 0.2 | 27 | 39 | 100 | 100 | 93* | 90 |
| 1 + 2 | 0.04 + 0.0016 | 0 | 0 | 96 | 99 | 68* | 43 |
| 1 + 2 | 0.04 + 0.008 | 0 | 0 | 96 | 100 | 86* | 43 |
| 1 + 2 | 0.04 + 0.04 | 0 | 0 | 99 | 100 | 85* | 82 |
| 1 + 2 | 0.04 + 0.2 | 97* | 39 | 100 | 100 | 94* | 91 |
| 1 + 2 | 0.2 + 0.0016 | 43* | 0 | 28 | 99 | 96* | 64 |
| 1 + 2 | 0.2 + 0.008 | 35* | 0 | 97 | 100 | 94* | 64 |
| 1 + 2 | 0.2 + 0.04 | 84* | 0 | 100 | 100 | 89 | 89 |
| 1 + 2 | 0.2 + 0.2 | 99* | 39 | 100 | 100 | 96* | 94 |

Table A shows mixtures of the present invention demonstrating synergistic control of wheat powdery mildew. As control cannot exceed 100 %, the increase above expected fungicidal activity can be greatest when the separate active ingredient components alone are at application rates providing considerably less than 100 % control. Synergy may not be evident at low application rates where the individual active ingredient components alone have little activity. However, in some instances high activity was observed for combinations wherein individual active ingredients alone at the same application rates had essentially no activity. The synergism is indeed quite surprising. Accordingly, this invention provides an remarkably improved method of combating powdery mildew diseases, such as wheat powdery mildew (*Erysiphe graminis*) in crops, especially cereals.

## Claims

**1.** A fungicidal mixture comprising:

(a) at least one compound selected from the compounds of Formula **1**, *N*-oxides, and salts thereof,

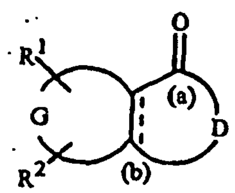

1 .

wherein

G is taken together with the two contiguous linking carbon atoms to form a fused phenyl, thiophene or pyridine ring;
$R^1$ is halogen;
$R^2$ is hydrogen or halogen;
D is selected from D-I, D-2 and D-3 and is attached at the position identified with (a*) to the carbon atom identified with (a) of the C=O moiety in Formula **1** and attached at the position identified with (b') to the carbon atom identified with (b') of the fused ring in Formula **1**,

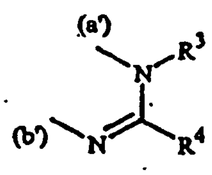 , 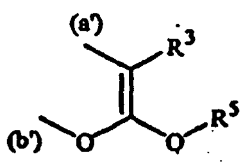 or 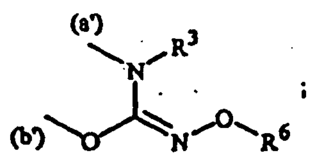 ;

D-1 D-2 D-3

$R^3$ is $C_1$-$C_6$ alkyl or $C_4$-$C_7$ cycloalkylalkyl;
$R^4$ is $C_1$-$C_6$ alkyl, $C_1$-$C_6$ alkoxy or $C_1$-$C_6$ alkylthio;
$R^5$ is $C_1$-$C_6$ alkyl, $C_2$-$C_6$ alkenyl or $C_2$-$C_6$ alkynyl; and
$R^6$ is $C_1$-$C_6$ alkyl, $C_1$-$C_3$ haloalkyl or cyclopropylmethyl;

(b) the compound of Formula **2**

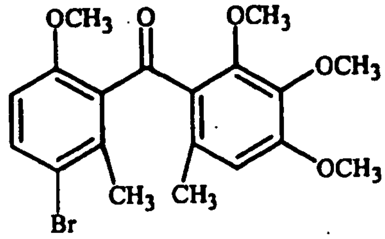

2 ;

wherein the weight ratio of component (b) to component (a) is from 125:1 to 1:125; and optionally
(c) one or more compounds selected from the group consisting of

(c1) alkylenebis(dithiocarbamate) fungicides;
(c2) cymoxanil;
(c3) phenylamide fungicides;
(c4) chlorothalonil;
(c5) carboxamides acting at complex II of the fungal mitochondrial respiratory electron transfer site;
(c6) quinoxyfen;
(c7) 5-chloro-6-(2,4,6-trifluorophenyl)-7-(4-methylpiperidin-1-yl)[1,2,4]triazolo[1,5-[alpha]]pyrimidine;
(c8) cyfiufenamid;
(c9) cyprodinil;
(c10) copper compounds;
(ell) phthalimide fungicides;
(c12) fosetyl-aluminum;
(c13) benzimidazole fungicides;
(c14) cyazofamid;
(c15) fluazinam;
(c16) iprovalicarb;
(c17) propamocarb;
(c18) validomycin;
(c19) dichlorophenyl dicarboximide fungicides;
(c20) zoxamide;
(c21) fluopicolide;
(c22) mandipropamid;
(c23) carboxylic acid amides acting on phospholipid biosynthesis and cell wall deposition;
(c24) dimethomorph;
(c25) non-DMI sterol biosynthesis inhibitors;
(c26) inhibitors of demethylase in sterol biosynthesis;
(c27) $bc_1$ complex fungicides; and

salts of compounds of (c1) through (c27),

provided that when D is D-3, the mixture includes at least one of (c1), (c2), (c6), (c7), (c8) or (c12).

**2.** The mixture of Claim 1 wherein component (a) is 6-iodo-3-propyl-2-propyloxy-4(3H)-quinazolinone.

**3.** The mixture of Claim 1 wherein component (c) is present and includes a compound of (c8).

**4.** The mixture of Claim 1 wherein component (c) is present and includes a compound of (c26).

**5.** The mixture of Claim 1 wherein component (c) is present and includes a compound of (c27).

**6.** The mixture of Claim 1 wherein the weight ratio of component (b) to component (a) is from 25:1 to 1:25.

**7.** The mixture of Claim 6 wherein the weight ratio of component (b) to component (a) is from 5:1 to 1:5.

**8.** A fungicidal composition comprising a fungicidally effective amount of the mixture of Claim 1 and at least one additional component selected from the group consisting of surfactants, solid diluents and liquid diluents.

**9.** A method for controlling a plant disease caused by a fungal plant pathogen comprising applying to the plant or portion thereof a fungicidally effective amount of the mixture of Claim 1.

**Patentansprüche**

**1.** Fungizide Mischung umfassend:

(a) mindestens eine Verbindung ausgewählt unter den Verbindungen der Formel 1, N-Oxiden und Salzen derselben,

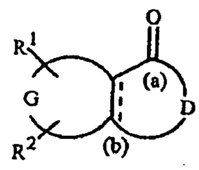

1

wobei
G mit den beiden benachbarten verknüpfenden Kohlenstoffatomen zusammengenommen wird, um einen anellierten Phenyl-, Thiophen- oder Pyridinring zu bilden;
$R^1$ Halogen ist;
$R^2$ Wasserstoff oder Halogen ist;
D unter D-1, D-2 und D-3 ausgewählt wird und an der Position, die mit (a') identifiziert ist, an das Kohlenstoffatom, das mit (a) des C=O-Anteils in Formel 1 identifiziert ist, angeknüpft ist und an der Position, die mit (b') identifiziert ist, an das Kohlenstoffatom, das mit (b') des anellierten Rings in Formel 1

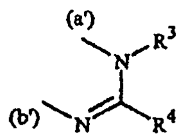 , 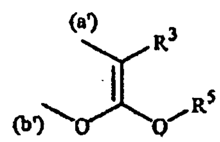 oder 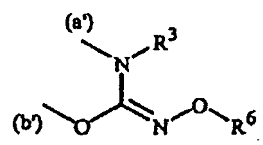 ;

D-1 D-2 D-3

identifiziert ist, angeknüpft ist,
$R^3$ $C_1$-$C_6$-Alkyl oder $C_4$-$C_7$-Cycloalkylalkyl ist;
$R^4$ $C_1$-$C_6$-Alkyl, $C_1$-$C_6$-Alkoxy oder $C_1$-$C_6$-Alkylthio ist; $R^5$ $C_1$-$C_6$-Alkyl, $C_2$-$C_6$-Alkenyl oder $C_2$-$C_6$-Alkynyl ist; und $R^6$ $C_1$-$C_6$-Alkyl, $C_1$-$C_3$-Haloalkyl oder Cyclopropylmethyl ist;
(b) die Verbindung der Formel 2

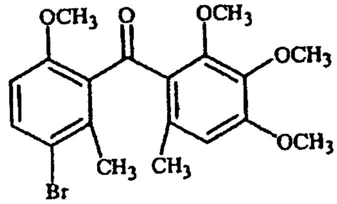

2 ;

wobei das Gewichtsverhältnis der Komponente (b) zur Komponente (a) 125:1 bis 1:125 beträgt; und wahlweise
(c) eine oder mehrere Komponenten ausgewählt aus der Gruppe bestehend aus

(c1) Alkylenbis(dithiocarbamat)-Fungiziden;
(c2) Cymoxanil;
(c3) Phenylamid-Fungiziden;
(c4) Chlorothalonil;
(c5) Carboxamiden, die am Komplex II der Mitochondrienatmungs-Elektronenübertragungsstelle von Pilzen wirken;
(c6) Quinoxyfen;
(c7) 5-Chlor-6-(2,4,6-trifluorphenyl)-7-(4-methylpiperidin-1-yl)[1,2,4]triazol[1,5-[alpha]]pyrimidin;
(c8) Cyfiufenamid;
(c9) Cyprodinil;
(c10) Kupferverbindungen;
(c11) Phthalimid-Fungiziden;
(c12) Fosetyl-Aluminium;
(c13) Benzimidazol-Fungiziden;
(c14) Cyazofamid;
(c15) Fluazinam;
(c16) Iprovalicarb;
(c17) Propamocarb;
(c18) Validamycin;
(19) Dichlorphenyldicarboximid-Fungiziden;
(c20) Zoxamid;
(c21) Fluopicolid;
(c22) Mandipropamid;
(c23) Carbonsäureamiden, die auf die Phospholipid-Biosynthese und Zellwandablagerung einwirken;
(c24) Dimethomorph;
(c25) Nicht-DMI-Sterol-Biosyntheseinhibitoren;
(c26) Inhibitoren von Demethylase bei der Sterol-Biosynthese;
(c27) $bc_1$-Komplex-Fungiziden; und

Salzen von Verbindungen von (c1) bis (c27),

vorausgesetzt, dass, wenn D D-3 ist, die Mischung mindestens eines von (c1), (c2), (c6), (c7), (c8) oder (c12) umfasst.

**2.** Mischung nach Anspruch 1, wobei die Komponente (a) 6-Iodo-3-propyl-2-propyloxy-4(3H)-chinazolinon ist.

**3.** Mischung nach Anspruch 1, wobei die Komponente (c) vorliegt und eine Verbindung von (c8) umfasst.

**4.** Mischung nach Anspruch 1, wobei die Komponente (c) vorliegt und eine Verbindung von (c26) umfasst.

**5.** Mischung nach Anspruch 1, wobei die Komponente (c) vorliegt und eine Verbindung von (c27) umfasst.

**6.** Mischung nach Anspruch 1, wobei das Gewichtsverhältnis der Komponente (b) zur Komponente (a) 25:1 bis 1:25 beträgt.

**7.** Mischung nach Anspruch 6, wobei das Gewichtsverhältnis der Komponente (b) zur Komponente (a) 5:1 bis 1:5 beträgt.

**8.** Fungizide Zusammensetzung umfassend eine fungizid wirksame Menge der Mischung nach Anspruch 1 und mindestens einer zusätzlichen Komponente ausgewählt aus der Gruppe bestehend aus Tensiden, festen Verdünnungsmitteln und flüssigen Verdünnungsmitteln.

**9.** Methode zum Bezwingen einer Pflanzenkrankheit, die durch ein Pilzpflanzenpathogen verursacht wird, umfassend das Aufbringen einer fungizid wirksamen Menge der Mischung nach Anspruch 1 auf die Pflanze oder einen Teil derselben.

## Revendications

**1.** Mélange fongicide comprenant:

(a) au moins un composé choisi parmi les composés de formule 1, les *N*-oxydes et les sels de ceux-ci,

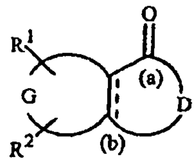

1

dans laquelle
G est pris conjointement avec les deux atomes de carbone à liaisons contiguës pour former un noyau phényle, thiophène ou pyridine condensé;
$R^1$ est un halogène;
$R^2$ est un hydrogène ou un halogène;
D est choisi parmi D-1, D-2 et D-3 et est attaché à la position identifiée par (a') à l'atome de carbone identifié par (a) du fragment C=O dans la formule 1 et attaché à la position identifiée par (b') à l'atome de carbone identifié par (b') du noyau condensé dans la formule 1,

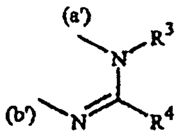 , 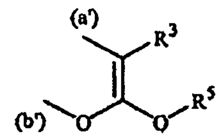 ou 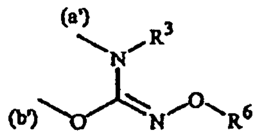 ;

D-1 D-2 D-3

$R^3$ est un alkyle en $C_1$-$C_6$ ou un cycloalkylalkyle en $C_4$-$C_7$;
$R^4$ est un alkyle en $C_1$-$C_6$, un alcoxy en $C_1$-$C_6$ ou un alkylthio en $C_1$-$C_6$;
$R^5$ est un alkyle en $C_1$-$C_6$, un alcényle en $C_2$-$C_6$ ou un alcynyle en $C_2$-$C_6$; et
$R^6$ est un alkyle en $C_1$-$C_6$, un halogénoalkyle en $C_1$-$C_3$ ou un cyclopropylméthyle;
(b) le composé de formule 2

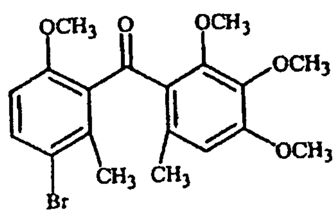

2 ;

dans laquelle le rapport pondéral du constituant (b) au constituant (a) est de 125:1 à 1:125; et optionnellement
(c) un ou plusieurs composés choisis dans le groupe constitué par

(c1) les fongicides de type alkylènebis(dithiocarbamate);
(c2) le cymoxanil;
(c3) les fongicides de type phénylamide;
(c4) le chlorothalonil;
(c5) les carboxamides agissant au complexe II du site de transfert d'électrons respiratoires mitochondriaux fongiques;

(c6) le quinoxyfène;
(c7) la 5-chloro-6-(2,4,6-trifluorophényl)-7-(4-méthylpipéridin-1-yl)[1,2,4]triazolo[1,5-[alpha]]pyrimidine;
(c8) le cyflufénamide;
(c9) le cyprodinil;
(c10) les composés du cuivre;
(c11) les fongicides de type phtalimide;
(c12) le fosétyl-aluminium;
(c13) les fongicides de type benzimidazole;
(c14) le cyazofamide;
(c15) le fluazinam;
(c16) l'iprovalicarb;
(c17) le propamocarb;
(c18) la validamycine;
(c19) les fongicides de type dichlorophényl dicarboximide;
(c20) le zoxamide;
(c21) le fluopicolide;
(c22) le mandipropamide;
(c23) les amides d'acides carboxyliques agissant sur la biosynthèse des phospholipides et le dépôt sur les parois cellulaires;
(c24) le diméthomorphe;
(c25) les non-inhibiteurs de déméthylase dans la biosynthèse des stérols (non-DMI);
(c26) les inhibiteurs de déméthylase dans la biosynthèse des stérols;
(c27) les fongicides au complexe $bc_1$; et

les sels des composés (c1) à (c27),

étant entendu que, lorsque D est D-3, le mélange inclut au moins l'un parmi (c1), (c2), (c6), (c7), (c8) ou (c12).

**2.** Mélange selon la revendication 1, dans lequel le constituant (a) est la 6-iodo-3-propyl-2-propyloxy-4(3H)-quinazolinone.

**3.** Mélange selon la revendication 1, dans lequel le constituant (c) est présent et inclut un composé de (c8).

**4.** Mélange selon la revendication 1, dans lequel le constituant (c) est présent et inclut un composé de (c26).

**5.** Mélange selon la revendication 1, dans lequel le constituant (c) est présent et inclut un composé de (c27).

**6.** Mélange selon la revendication 1, dans lequel le rapport pondéral du constituant (b) au constituant (a) est de 25:1 à 1:25.

**7.** Mélange selon la revendication 6, dans lequel le rapport pondéral du constituant (b) au constituant (a) est de 5:1 à 1:5.

**8.** Composition fongicide comprenant une quantité fongicidement efficace du mélange selon la revendication 1 et au moins un constituant supplémentaire choisi dans le groupe constitué par les agents tensioactifs, les diluants solides et les diluants liquides.

**9.** Procédé pour lutter contre une maladie de plante provoquée par un pathogène de plante fongique, comprenant l'application, sur la plante ou une partie de celle-ci, d'une quantité fongicidement efficace du mélange selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9426722 A
- WO 9914202 A
- US 6066638 A
- US 6245770 B
- US 6262058 B
- US 6277858 B
- WO 03014103 A
- WO 02094797 A
- EP 897904 A
- WO 03024222 A
- US 3060084 A
- WO 9113546 A
- US 4172714 A
- US 4144050 A
- US 3920442 A
- DE 3246493
- US 5180587 A
- US 5232701 A
- US 5208030 A
- GB 2095558 A
- US 3299566 A
- US 3235361 A
- US 3309192 A
- US 2891855 A
- WO 2003010149 A

### Non-patent literature cited in the description

- **T. L. Gilchrist.** Comprehensive Organic Synthesis. Pergamon Press, 748-750
- **M. Tisler ; B. Stanovnik.** Comprehensive Heterocyclic Chemistry. Pergamon Press, vol. 3, 18-20
- **R. Grimmett ; B. R. T. Keene.** Advances in Heterocyclic Chemistry. Academic Press, vol. 43, 149-161
- **M. Tisler ; B. Stanovnik.** Advances in Heterocyclic Chemistry. Academic Press, vol. 9, 285-291
- **G. W. H. Cheeseman ; E. S. G. Werstiuk.** Advances in Heterocyclic Chemistry. Academic Press, vol. 22, 390-392
- **Watkins et al.** Handbook of Insecticide Dust Diluents and Carriers. Dorland Books
- **Marsden.** Solvents Guide. Interscience, 1950
- McCutcheon's Emulsifiers and Detergents. McCutcheon's Division, The Manufacturing Confectioner Publishing Co,
- **Sisely ; Wood.** Encyclopedia of Surface Active Agents. Chemical Publ. Co., Inc, 1964
- **A. S. Davidson ; B. Milwidsky.** Synthetic Detergents. John Wiley and Sons, 1987
- McCutcheon's Volume 2: Functional Materials. McCutcheon's Division, The Manufacturing Confectioner Publishing Co,
- **Browning.** Agglomeration. *Chemical Engineering,* 04 December 1967, 147-48
- Perry's Chemical Engineer's Handbook. McGraw-Hill, 1963, 8-57
- The Formulator's Toolbox - Product Forms for Modern Agriculture. **T. S. Woods.** Pesticide Chemistry and Bioscience, The Food-Environment Challenge. The Royal Society of Chemistry, 1999, 120-133
- **Klingman.** Weed Control as a Science. John Wiley and Sons, Inc, 1961, 81-96
- **Hance et al.** Weed Control Handbook. Blackwell Scientific Publications, 1989
- Developments in formulation technology. PJB Publications, 2000
- The Pesticide Manual. British Crop Protection Council, 2003
- The BioPesticide Manual. British Crop Protection Council, 2001
- *J. Biol. Chem.,* 1992, vol. 267, 13175-79
- **K. H. Kuck et al.** Modern Selective Fungicides - Properties, Applications and Mechanisms of Action. Gustav Fischer Verlag, 1995, 205-258
- *J. Biol. Chem.,* 1989, vol. 264, 14543-48
- *Methods Enzymol.,* 1986, vol. 126, 253-71
- **H. Sauter et al.** *Angew. Chem. Int. Ed.,* 1999, vol. 38, 1328-1349
- **Tames, P. M. L.** *Neth. J. Plant Pathology,* 1964, vol. 70, 73-80
- **Colby, S. R.** Calculating Synergistic and Antagonistic Responses of Herbicide Combinations. *Weeds,* 1967, vol. 15, 20-22